# EUROPÄISCHE PATENTANMELDUNG

(11) **EP 0 523 344 A1**
(43) Veröffentlichungstag der Anmeldung: **20.01.1993**
(21) Anmeldenummer: 92108373.9
(22) Anmeldetag: 18.05.1992
(51) Int. Cl.: H02K 15/04

(54) **Verfahren und Vorrichtung zum Wickeln von Spulen für elektrische Maschinen aus Paralleldrähten**

(30) Priorität: 19.07.1991 DE 4123934
(71) Anmelder: STATOMAT SPEZIALMASCHINEN GMBH, D-61138 Niederdorfelden (DE)
(72) Erfinder: Hensel, Edgar, W-6472 Altenstadt (DE); Kolodziej, Helmut, W-6370 Oberursel (DE); Gassner, Edmund, W-6369 Nidderau 1 (DE)
(74) Vertreter: Jochem, Bernd, Dipl.-Wirtsch.-Ing.

(57) **Zusammenfassung**

Verfahren und Vorrichtung dienen zum Wickeln von Spulen aus Paralleldrähten auf einer Schablone (16) und zum axialen Einziehen der Spulen in einen Stator oder Rotor einer elektrischen Maschine mittels eines Übertragungswerkzeugs (14). Um am Umfang versetzt angeordnete Spulen ohne Drahtunterbrechung und mit unverdrillten Paralleldrähten zu erhalten, ist vorgesehen, daß die Spulenwindungen auf der Schablone (16) durch deren Drehung gemeinsam und in Eingriff mit dem Übertragungswerkzeug (14) vor einem im wesentlichen undrehbar gehaltenen Drahtführungsorgan (42) erzeugt werden. Die Spulenwindungen werden während der gemeinsamen Drehbewegungen in unterschiedlichen relativen Drehwinkelstellungen von der Schablone (16) auf das Übertragungswerkzeug (14) übergestreift.

## Beschreibung

Die Erfindung betrifft ein Verfahren und eine Vorrichtung zum Wickeln von Spulen aus Paralleldrähten auf einer Schablone und zum axialen Einziehen mehrerer miteinander verbundener Spulen am Umfang versetzt zueinander in einen Stator oder Rotor einer elektrischen Maschine mittels eines im wesentlichen hohlzylindrischen, mit Längsschlitzen versehenen Übertragungswerkzeugs, auf welches während des Wickelns Spulenwindungen von der Schablone übergestreift werden.

Ein derartiges Verfahren und eine entsprechende Vorrichtung sind z. B. in der DE-OS 23 09 837 und der DE-OS 28 08 048 beschrieben. Sie lassen sich unter günstigen Umständen auch für das Wickeln von Spulen aus Paralleldrähten einsetzen, wenn man nur wenige Paralleldrähte verwendet und die Längsschlitze des Übertragungswerkzeugs breit genug sind, um die sich beim Wickeln mittels eines umlaufenden Drahtführungsorgans (sog. Flyer) und einer feststehenden Schablone verdrillenden Drähte aufzunehmen. Grundsätzlich ist jedoch das Verdrillen bzw. Verseilen von Paralleldrähten unerwünscht. Außerdem wird mit zunehmend mehr Paralleldrähten sehr schnell die Grenze erreicht, bei der die aus den verdrillten Paralleldrähten gebildeten, verhältnismäßig dicken Spulenwindungen nicht mehr in die schmalen Längsschlitze des Übertragungswerkzeugs passen.

Es sind zwar auch Wickelverfahren und -vorrichtungen bekannt, bei denen Paralleldrähte mittels eines undrehbar gehaltenen Drahtführungsorgans auf eine rotierende Schablone aufgewickelt und anschließend die vollständigen Spulen mittels eines Übertragungswerkzeugs auf einen Stator übertragen werden, wobei die Paralleldrähte sich nicht verdrillen. Allerdings lassen sich bei diesem Verfahren nicht bereits während des Wickelns Spulenwindungen von der Schablone auf das Übertragungswerkzeug überstreifen. Es können daher auch nicht die üblichen kurzen Schablonen verwendet und damit über den Umfang des Stators versetzt angeordnete, durch den ununterbrochenen Draht miteinander verbundene Spulen hergestellt werden.

Der Erfindung liegt die Aufgabe zugrunde, ein Verfahren der eingangs genannten Art und eine zu dessen Durchführung geeignete Vorrichtung zu entwickeln, mittels derer sich am Umfang eines Stators oder Rotors versetzt angeordnete Spulen oder Spulengruppen aus unverdrillten Paralleldrähten herstellen lassen.

Vorstehende Aufgabe wird verfahrensmäßig dadurch gelöst, daß die Spulenwindungen auf der Schablone durch deren Drehung gemeinsam und in Eingriff mit dem Übertragungswerkzeug vor einem im wesentlichen undrehbar gehaltenen Drahtführungsorgan erzeugt und während gemeinsamer Drehbewegungen in unterschiedlichen relativen Drehwinkelstellungen von der Schablone auf das Übertragungswerkzeug übergestreift werden.

Überraschenderweise können durch den erfindungsgemäßen Vorschlag die Vorteile der beiden geschilderten vorbekannten Verfahren kombiniert werden, ohne daß ihre jeweiligen Nachteile mit in Kauf genommen werden müssen. Entscheidend hierfür ist das neue Merkmal, das Übertragungswerkzeug zusammen mit der Schablone rotieren zu lassen, obgleich die Mittellängsachsen dieser beiden Einheiten nicht miteinander fluchten. Dies bedingt zwar in der Regel niedrigere Wickel-Drehzahlen, erlaubt aber andererseits die Herstellung und das axiale Einziehen von Wicklungen, wie sie sich sonst bisher maschinell nicht haben herstellen lassen.

In einer ersten Ausführungsvariante des erfindungsgemäßen Verfahrens wird bei der gemeinsamen Drehbewegung der Schablone und des Übertragungswerkzeugs die Mittellängsachse der Schablone auf einer Kreisbahn um die Mittellängsachse des Übertragungswerkzeugs bewegt. Diese Ausführung kann man z. B. dann wählen, wenn das Übertragungswerkzeug mitsamt darin aufgenommenen Spulen verhältnismäßig groß und schwer ist. Die andere Alternative, bei der sich während der gemeinsamen Drehbewegung die Mittellängsachse des Übertragungswerkzeugs auf einer Kreisbahn um die Mittellängsachse der Schablone bewegt, wird dagegen in solchen Fällen bevorzugt, in denen man den Vorgang des Aufwickelns des Drahts auf die Schablone möglichst einfach gestalten möchte.

Eine Vorrichtung zur Durchführung des erfindungsgemäßen Verfahrens besteht aus einer Schablone zur Erzeugung von Spulenwindungen aus Paralleldrähten im Zusammenwirken mit einem Drahtführungsorgan und aus einem Übertragungswerkzeug, welches während des Wickelns in Eingriff mit der Schablone steht und zwischen den Wickelvorgängen relativ zu dieser drehschaltbar ist, und auf welches die Spulenwindungen von der Schablone überstreifbar sind, wobei die Schablone gemeinsam mit dem Übertragungswerkzeug rotierend antreibbar und das Drahtführungsorgan im wesentlichen undrehbar gehalten ist. Das Übertragungswerkzeug kann dabei eine Übertragungszange sein, mittels welcher die auf der Schablone erzeugten Spulen auf ein Einziehwerkzeug zum axialen Einziehen der Spulen in einen Stator oder Rotor übertragen werden. Noch wichtiger ist die Erfindung, wenn das Einziehwerkzeug selbst als Übertragungswerkzeug dient, also die auf der Schablone erzeugten Spulenwindungen unmittelbar in das Einziehwerkzeug übergestreift werden sollen, weil die Einziehwerkzeuge zum axialen Einziehen von Spulen in Stator- oder Rotornuten in der Regel noch schmalere Längsschlitze haben als Übertragungszangen. Nachstehend werden in der Zeichnung dargestellte Ausführungsbeispiele der Erfindung näher erläutert. Es zeigen:
- Fig. 1: einen schematischen Axialschnitt durch eine Wickelvorrichtung zur Erzeugung von in einen Stator einzuziehenden Spulen;
- Fig. 2: einen vereinfachten Querschnitt durch die Vorrichtung nach Fig. 1 mit einer auf die Schablone und das Übertragungswerkzeug beschränkten Ansicht;
- Fig. 3: eine Ansicht entsprechend Fig. 2 eines weiteren Ausführungsbeispiels, bei welchem die gemeinsame Drehbewegung des Übertragungswerkzeugs und der Schablone um deren Längsachse stattfindet.

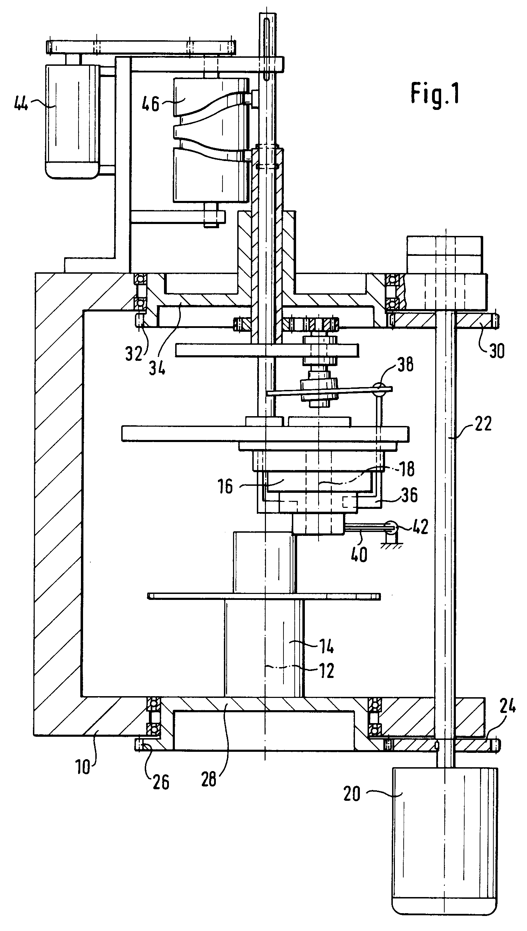

Die in Fig. 1 dargestellte Wickelvorrichtung hat einen Rahmen 10, an dem mit senkrechter Mittellängsachse 12 ein Übertragungswerkzeug 14, im vorliegenden Fall ein Einziehwerkzeug, und seitlich versetzt darüber eine Schablone 16, deren Längsachse mit 18 bezeichnet ist, drehbar gelagert sind. Das Einziehwerkzeug 14 und die Schablone 16 können grundsätzlich die übliche Form haben, wie z. B. in der DE-OS 23 09 837 und der DE-OS 28 08 048 gezeigt. Die Art des Eingriffs der Schablone 16 in das Einziehwerkzeug 14 während des Wickelvorgangs ist dieselbe wie bei den bekannten Wickelvorrichtungen. Unterschiedlich ist jedoch, daß das Einziehwerkzeug 14 und die Schablone 16 während des Wickelns in Eingriffsstellung als Einheit um die Mittellängsachse 12 des Einziehwerkzeugs 14 rotieren. Als Drehantrieb dient ein Elektromotor 20, dessen Abtriebswelle 22 über ein erstes Zahnrad 24 eine mit einer passenden Außenverzahnung 26 versehene, drehbar gelagerte Halterung 28 des Einziehwerkzeugs 14 und über ein zweites Zahnrad 30 eine ebenfalls mit einer passenden Außenverzahnung 32 versehene, drehbar gelagerte Halterung 34 der Schablone 16 rotierend antreibt. Das Übersetzungsverhältnis der Zahnräder 24, 26 ist dasselbe wie das der Zahnräder 30, 32, so daß beide Halterungen 28 und 34 simultan und mit gleicher Drehzahl angetrieben werden.

Die Drehachse der Halterung 34 fluchtet mit der Mittellängsachse 12 und gleichzeitig Drehachse der Halterung 28 und des Einziehwerkzeugs 14. Die Schablone 16 ist jedoch derart exzentrisch an der Halterung 34 gelagert, daß sich ihre Mittellängsachse 18 mit seitlichem Versatz parallel zur Drehachse 12 erstreckt.

Die Schablone 16 hat in bekannter Weise mehrere Stufen bzw. Kammern, die nacheinander bewickelt werden. Wie ebenfalls bekannt, sorgen während des Wickelvorgangs Abstreifer 36 dafür, daß Windung für Windung aus der Wickelebene nach unten zum freien Ende der Schablone 16 hin vorgeschoben und durch die nachfolgenden Windungen auf das Einziehwerkzeug 14 übergestreift wird. Dort werden die Spulenwindungen in axialen Längsschlitzen aufgenommen und gehalten. Die während jeder Umdrehung der Schablone 16 ausgeführte kurze hin- und hergehende Bewegung der Abstreifer 36 wird in bekannter Weise mittels einer Taumelscheibe 38 erzeugt, deren Aufbau und Wirkungskreise in der DE-OS 23 09 837 erläutert sind.

Statt mittels der Abstreifer 36 können die Drahtwindungen während des Wickelns auch dadurch von der Schablone 16 auf das Einziehwerkzeug 14 übergestreift werden, daß jeweils auf einen konischen Bereich der einzelnen Schablonenkammern bzw. -stufen gewickelt wird. Von diesem können unter günstigen Wickelbedingungen die Windungen von allein nach unten in das Einziehwerkzeug 14 geschoben werden.

Während des Wickelns werden Paralleldrähte 40 von einem Vorrat abgezogen, gleiten durch ein nur angedeutetes Drahtführungsorgan 42, welches mit Bezug auf die Drehachse 12 im wesentlichen undrehbar gehalten ist, und werden auf die Schablone 16 infolge deren Drehung aufgehaspelt. Das Drahtführungsorgan 42 befindet sich während des Wickelns auf die unterste, kleinste Schablonenstufe, die in dieser Phase, wie in Fig. 1 gezeigt, mit ihrem unteren Ende in das Einziehwerkzeug 14 eingreift, auf einem Niveau dicht oberhalb von diesem. Nachdem eine bestimmte Anzahl Drahtwindungen auf der untersten, kleinsten Schablonenstufe erzeugt worden ist, wird die Schablone 16 insgesamt durch einen Elektromotor 44 mittels einer Kurventrommel 46 um die Breite einer Schablonenstufe nach unten vorgeschoben, so daß nunmehr auch die zweite Schablonenstufe mit dem Einziehwerkzeug 14 in Eingriff kommt. Da das Drahtführungsorgan 42 und die Abstreifer 36 auf ihrem Niveau bleiben, werden nachfolgend auf der zweiten Schablonenstufe Drahtwindungen mit größerem Durchmesser erzeugt, die wiederum Windung für Windung auf das Einziehwerkzeug 14 übergestreift werden. Dies geht so weiter, bis auch die oberste Schablonenstufe mit dem Einziehwerkzeug 14 in Eingriff ist. Nachdem dann die vorgesehene Anzahl Windungen erzeugt worden ist, werden mittels des Elektromotors 44 und der Kurventrommel 46 die Abstreifer 36 nach unten bis unter die Oberkante des Einziehwerkzeugs 14 vorgeschoben, und dann wird die Schablone 16 insgesamt nach oben zurückgezogen, wobei durch die Abstreifer 36 auch noch die letzten auf der Schablone 16 sitzenden Drahtwindungen in das Einziehwerkzeug 14 hinein abgestreift werden.

Je nach dem Querschnitt der Schablone 16 und der gewünschten Wickelgeschwindigkeit kann auch das Drahtführungsorgan 42 während einer Umdrehung der Schablone 16 um die Drehachse 12 eine gewisse radiale oder Bewegung in Umfangsrichtung ausführen. Hierbei handelt es sich jedoch um verhältnismäßig kurze, hin- und hergehende Bewegungen, so daß im Prinzip das Drahtführungsorgan 42 undrehbar gehalten ist, während die Schablone 16 umläuft.

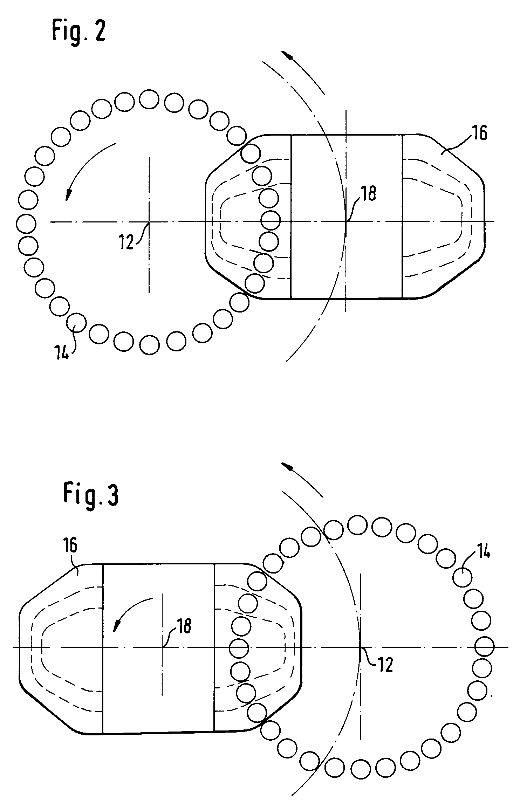

Die Drehbewegungen des Einziehwerkzeugs 14 und der Schablone 16 der Wickelvorrichtung nach Fig. 1 sind in Fig. 2 in einem Querschnitt schematisch dargestellt. Im Vergleich dazu zeigt Fig. 3, daß alternativ auch die Schablone 16 um ihre Mittellängsachse bzw. eine im mittleren Bereich gelegene Achse rotieren kann, um die sich dann auch das insgesamt seitlich versetzt angeordnete Einziehwerkzeug 14 drehen muß. Der seitliche Versatz ist durch die Eingriffsbedingungen zwischen Schablone und Einziehwerkzeug vorgegeben. Selbstverständlich besteht auch die Möglichkeit, das Einziehwerkzeug 14 oder an seiner Stelle eine Übertragungszange sowie die Schablone 16 um eine gemeinsame Drehachse rotieren zu lassen, welche weder die Mittellängsachse des Einziehwerkzeugs 14 noch die der Schablone 18 ist.

Mit der vorstehend beschriebenen Vorrichtung kann zunächst eine erste Spulengruppe, bestehend aus mehreren Spulen entsprechend den verschiedenen Schablonenstufen, hintereinander und ohne Drahtunterbrechung erzeugt werden. Nachdem alle Spulenwindungen dieser Gruppe von der Schablone 16 abgestreift worden sind, wird diese vorübergehend axial aus dem Einziehwerkzeug 14 nach oben herausgezogen, dann das Einziehwerkzeug 14 um einen bestimmten Winkel gedreht, anschließend die Schablone 16 wieder in Eingriffsstellung gebracht und die nächste Spulengruppe gewickelt usw., bis alle Spulen einer gemeinsam in einen Stator einzuziehenden Lage von Spulen ohne Drahtunterbrechung gewickelt worden sind. Dann wird das Einziehwerkzeug 14 zu einer Einziehstation gebracht, um in herkömmlicher Weise die nunmehr aus unverdrillten Paralleldrähten bestehenden Spulen axial in den Stator einzuziehen.

## Patentansprüche

1. Verfahren zum Wickeln von Spulen aus Paralleldrähten auf einer Schablone (16) und zum axialen Einziehen mehrerer miteinander verbundener Spulen am Umfang versetzt zueinander in einen Stator oder Rotor einer elektrischen Maschine mittels eines im wesentlichen hohlzylindrischen, mit Längsschlitzen versehenen Übertragungswerkzeugs (14), auf welches während des Wickelns Spulenwindungen von der Schablone (16) übergestreift werden, **dadurch gekennzeichnet,** daß die Spulenwindungen auf der Schablone (16) durch deren Drehung gemeinsam und in Eingriff mit dem Übertragungswerkzeug (14) vor einem im wesentlichen undrehbar gehaltenen Drahtführungsorgan (42) erzeugt und während gemeinsamer Drehbewegungen in unterschiedlichen relativen Drehwinkelstellungen von der Schablone (16) auf das Übertragungswerkzeug (14) übergestreift werden.

2. Verfahren nach Anspruch 1, **dadurch gekennzeichnet,** daß bei der gemeinsamen Drehbewegung die Mittellängsachse (18) der Schablone (16) auf einer Kreisbahn um die Mittellängsachse (12) des Übertragungswerkzeugs (14) bewegt wird.

3. Verfahren nach Anspruch 1, **dadurch gekennzeichnet,** daß bei der gemeinsamen Drehbewegung die Mittellängsachse (12) des Übertragungswerkzeugs (14) auf einer Kreisbahn um die Mittellängsachse (18) der Schablone (16) bewegt wird.

4. Vorrichtung zur Durchführung des Verfahrens nach einem der Ansprüche 1 bis 3, bestehend aus einer Schablone (16) zur Erzeugung von Spulenwindungen aus Paralleldrähten im Zusammenwirken mit einem Drahtführungsorgan (42) und aus einem Übertragungswerkzeug (14), welches während des Wickelns in Eingriff mit der Schablone (16) steht und zwischen den Wickelvorgängen relativ zu dieser drehschaltbar ist, und auf welches die Spulenwindungen von der Schablone (16) überstreifbar sind, **dadurch gekennzeichnet,** daß die Schablone (16) gemeinsam mit dem Übertragungswerkzeug (14) rotierend antreibbar und das Drahtführungsorgan (42) im wesentlichen undrehbar gehalten ist.

5. Vorrichtung nach Anspruch 4, **dadurch gekennzeichnet,** daß die Mittellängsachse (12) des Übertragungswerkzeugs (14) die Drehachse ist.

6. Vorrichtung nach Anspruch 4, **dadurch gekennzeichnet,** daß die Mittellängsachse (18) der Schablone (16) die Drehachse ist.

7. Vorrichtung nach einem der Ansprüche 4 bis 6, **dadurch gekennzeichnet,** daß das Übertragungswerkzeug (14) ein Einziehwerkzeug ist.
